(19) Europäisches Patentamt
European Patent Office
Office européen des brevets

(11) **EP 3 739 212 B1**

(12) **EUROPÄISCHE PATENTSCHRIFT**

(45) Veröffentlichungstag und Bekanntmachung des Hinweises auf die Patenterteilung:
**01.07.2026 Patentblatt 2026/27**

(21) Anmeldenummer: **20174364.8**

(22) Anmeldetag: **13.05.2020**

(51) Internationale Patentklassifikation (IPC):
***F04C 14/28*** *(2006.01)*

(52) Gemeinsame Patentklassifikation (CPC):
**F04C 14/28;** F04C 2/12; F04C 2270/20

(54) **VERFAHREN ZUR ERMITTLUNG EINES DURCHFLUSSVOLUMENS EINES DURCH EINE PUMPE GEFÖRDERTEN FLUIDS**

METHOD FOR DETERMINING A FLOW VOLUME OF A FLUID PUMPED BY A PUMP

PROCÉDÉ DE DÉTERMINATION D'UN VOLUME D'ÉCOULEMENT D'UN FLUIDE TRANSPORTÉ PAR UNE POMPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2019 DE 102019112792**

(43) Veröffentlichungstag der Anmeldung:
**18.11.2020 Patentblatt 2020/47**

(73) Patentinhaber: **Leistritz Pumpen GmbH**
**90459 Nürnberg (DE)**

(72) Erfinder:
• **TROSSMANN, Oliver**
**90522 Oberasbach (DE)**
• **MAURISCHAT, Roland**
**90453 Nürnberg (DE)**
• **ROSSOW, Philipp**
**90574 Roßtal (DE)**

(74) Vertreter: **Lindner Blaumeier**
**Patent- und Rechtsanwälte**
**Partnerschaftsgesellschaft mbB**
**Dr. Kurt-Schumacher-Str. 23**
**90402 Nürnberg (DE)**

(56) Entgegenhaltungen:
DE-A1- 102011 086 572        DE-A1- 102017 205 777
US-A- 5 267 441            US-A1- 2018 259 382

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

# EP 3 739 212 B1

**Beschreibung**

Die Erfindung betrifft ein Verfahren zur Ermittlung eines Durchflussvolumens eines durch eine Pumpe geförderten Fluids. Daneben betrifft die Erfindung eine Pumpe zur Förderung eines Fluids.

Pumpen, insbesondere Verdrängerpumpen, werden in einer Vielzahl von Anwendungsbereichen eingesetzt, in denen ein durch die Pumpe gefördertes Durchflussvolumen überwacht bzw. gesteuert werden soll. Hierzu kann ein in der Zuleitung oder Ableitung der Pumpe angeordneter Durchflusszähler genutzt werden. Dies kann jedoch die Komplexität und den Bauraumverbrauch der Pumpe erhöhen und, je nach Art des genutzten Durchflusszählers, unter Umständen den Wirkungsgrad der Pumpe senken. Ein Beispiel für eine Pumpe, bei der das Durchflussvolumen ermittelt wird, ist in DE 10 2017 205777 A1 offenbart. Diese Schrift zeigt die Merkmale des Oberbegriffs des Anspruchs 1 und wird als nächstliegender Stand der Technik angesehen. Weitere Beispiele sind in DE 10 2011 086572 A1, US 2018/259382 A1 und US 5 267 441 A offenbart.

Der Erfindung liegt somit die Aufgabe zugrunde, ein demgegenüber verbessertes Verfahren zur Ermittlung eines Durchflussvolumens durch eine Pumpe anzugeben.

Die Aufgabe wird erfindungsgemäß durch ein Verfahren zur Ermittlung eines Durchflussvolumens eines durch eine Pumpe geförderten Fluids nach Anspruch 1 gelöst.

Erfindungsgemäß wird somit vorgeschlagen, ein Durchflussvolumen direkt aus Betriebsparametern der Pumpe und Informationen bezüglich einer bekannten Pumpengeometrie zu ermitteln. Hierbei ist es an sich bekannt, dass Verdrängerpumpen, beispielsweise Schraubenspindelpumpen, pro Arbeitszyklus, also beispielsweise pro Umdrehung, ein bestimmtes Fluidvolumen fördern würden, wenn keine internen Spalte vorhandenen wären. Die Vernachlässigung von internen Spalten und somit eines Fluidrückflusses entgegen der Förderrichtung innerhalb der Pumpe führt jedoch in vielen Anwendungsfällen zu unakzeptabel hohen Fehlern. Im Rahmen der Erfindung wurde erkannt, dass durch die zusätzliche Berücksichtigung der Druckinformation das Durchflussvolumen mit erheblich verbesserter Genauigkeit ermittelt werden kann, womit auf eine separate Ermittlung des Durchflussvolumens durch einen separaten Durchflusszähler in einem Großteil der Anwendungsfälle verzichtet werden kann.

Wie später noch genauer erläutert werden wird, ist es hierbei möglich, den Einfluss der Pumpengeometrie auf die Leckage und somit auf das Durchflussvolumen mit wenigen Parametern zu modellieren. Das Durchflussvolumen kann somit mit geringem Rechenaufwand und hierdurch beispielsweise auf einer ohnehin vorhandenen Steuereinrichtung der Pumpe ermittelt werden. Zudem können die relevanten Pumpeninformationen einer Pumpe mit relativ geringem Aufwand, beispielsweise im Rahmen der Herstellung bzw. Qualitätskontrolle, ermittelt werden.

Die Pumpeninformation kann ein theoretisches Fördervolumen der Pumpe pro Umdrehung der Pumpe beschreiben bzw. kann die Ermittlung dieses theoretischen Fördervolumens ermöglichen. Ergänzend oder alternativ kann die Pumpeninformation wenigstens eine Information umfassen, die den volumetrischen Wirkungsgrad der Pumpe beeinflusst, also insbesondere Informationen bezüglich Spaltmaßen bzw. einer Leckage aufgrund von Spalten in der Pumpe. Die Pumpeninformation kann beispielsweise herstellerseitig bereitgestellt werden und Informationen umfassen, die ohnehin im Rahmen der Auslegung bzw. der Produktion der Pumpe anfallen. Ergänzend oder alternativ kann die Pumpeninformation bzw. ein Teil der Pumpeninformation durch Kalibriermessungen an der Pumpe ermittelt werden.

Die Drehzahl kann beispielsweise durch einen Drehzahlsensor bzw. Drehwinkelsensor in der Pumpe bzw. in einem Antrieb der Pumpe ermittelt werden. In vielen Anwendungsfällen wird die Drehzahl der Pumpe ohnehin aktiv durch eine Steuereinrichtung der Pumpe gesteuert oder geregelt. In diesen Fällen ist ohnehin eine Solldrehzahl bekannt, die unmittelbar als Drehzahlinformation ausgewertet werden kann. Es ist auch möglich, Vibrationen von Pumpenkomponenten zu erfassen und hieraus auf die Drehzahl zurückzuschließen oder Ähnliches. In einigen Anwendungsfällen kann die Drehzahl auch als konstant angenommen werden.

Die Druckinformation kann insbesondere durch einen oder mehrere Drucksensoren ermittelt werden, die Teil der Pumpe oder eines durch die Pumpe angetriebenen Fluidkreislaufes sein können. Der Differenzdruck kann eine Druckdifferenz zwischen dem Fluidauslass und dem Fluideinlass der Pumpe angeben. Bei steigendem Differenzdruck erhöht sich die Leckage und die Fördermenge bei gleicher Drehzahl der Pumpe sinkt. Je nach Anwendungsfall kann es auch möglich sein, den Differenzdruck an der Pumpe als konstant anzunehmen.

Zumindest eine Größe, von der das Durchflussvolumen abhängt, wird im Rahmen des Verfahrens, insbesondere unter Verwendung von pumpenseitigen oder externen Sensoren, ermittelt. Die wenigstens eine ermittelte Größe kann die Drehzahlinformation und/oder die Druckinformation sein, es können jedoch auch weitere Betriebsparameter, beispielsweise Fluideigenschaften, eine Fluidtemperatur oder Ähnliches, sensorisch ermittelt werden.

Die weiteren Erläuterungen gehen beispielhaft davon aus, dass eine Verdrängerpumpe, insbesondere eine Schraubenspindelpumpe, als Pumpe verwendet wird. Als Schraubenspindelpumpe kann vorzugsweise eine Dreischraubenspindelpumpe verwendet werden, jedoch alternativ auch eine Zweischraubenspindelpumpe. Die folgenden Erläuterungen lassen sich jedoch auch auf andere Pumpen, insbesondere andere Verdrängerpumpen, übertragen.

In den folgenden Ausführungen wird zudem davon ausgegangen, dass das Fluid bei dem an der Pumpe auftretenden Differenzdruck näherungsweise als inkompressibel beschrieben werden kann. Auch bei Vernachlässigung der Kompressibilität können in einer Vielzahl von Anwendungsfällen ausreichende Genauigkeiten der Durchflussvolumenbestimmung erreicht werden. Durch Vernachlässigung der Kompressibilität ist das erfindungsgemäße Verfahren mit geringem Rechenaufwand durchführbar und somit ohne weiteres auf üblichen Steuereinrichtungen von Pumpen, beispielsweise Mikrokontrollern, implementierbar. Zudem kann die erforderliche Pumpeninformation relativ einfach ermittelt werden. Es ist jedoch auch möglich, bei den relevanten Berechnungsschritten die Kompressibilität zusätzlich zu berücksichtigen, was insbesondere bei einem sehr hohen Differenzdruck an der Pumpe oder bei einer Förderung von Gasen zu einer erhöhten Genauigkeit des ermittelten Durchflussvolumens führen kann.

Das Durchflussvolumen kann berechnet werden, indem ein in Abhängigkeit der Druckinformation ermittelter Leckagevolumenstrom von einem in Abhängigkeit eines durch die Pumpeninformation vorgegebenen Pumpenvolumens und der Drehzahlinformation ermittelten theoretischen Fördervolumenstrom subtrahiert wird. Anders ausgedrückt kann im erfindungsgemäßen Verfahren der Leckagevolumenstrom als Korrektur des theoretisch aufgrund des Pumpenvolumens und der Drehzahl erreichten Fördervolumenstroms verwendet werden. Der Leckagevolumenstrom kann insbesondere zusätzlich von dem Pumpenvolumen und/oder einer Spaltgeometrie abhängen, wobei diesbezügliche Parameter als Teil der Pumpeninformation bereitgestellt werden können. Vorzugsweise wird bei der Ermittlung des Leckagevolumenstroms wenigstens eine das geförderte Fluid betreffende Fluidinformation, insbesondere deren Viskosität und/oder Dichte, berücksichtigt.

In dem erfindungsgemäßen Verfahren ist als Zusatzinformation ein Betriebsstrom und/oder ein Wellenmoment der Pumpe erfasst, wobei das Durchflussvolumen und der Leckagevolumenstrom in Abhängigkeit der Zusatzinformation ermittelt werden. Als weitere Zusatzinformation kann eine Temperatur und/oder eine Dichte des Fluids erfasst werden, wobei das Durchflussvolumen und/oder der Leckagevolumenstrom in Abhängigkeit der weiteren Zusatzinformation ermittelt werden können. Die Ermittlung der genannten Größen oder zumindest von Teilen der genannten Größen kann durch eine pumpenseitige und/oder eine pumpenexterne Sensorik erfolgen.

Der Leckagevolumenstrom kann insbesondere von der Viskosität und Dichte der Flüssigkeit abhängen. Durch eine semiempirische Dimensionsanalyse kann für den Leckagevolumenstrom $Q_L$ die folgende Beziehung angegeben werden:

$$(1) \qquad Q_L^+ = a \cdot \left(\Delta p^+ \cdot \Psi^3\right)^b, \text{ mit } \Delta p^+ = \frac{\Delta p}{v^2 \rho V^{-2/3}} \text{ und } Q_L^+ = \frac{Q_L}{vV^{1/3}}$$

Hierbei sind die Größen $Q_L^+$ und $\Delta p^+$ dimensionslose Größen, die dem Leckagevolumenstrom $Q_L$ und dem Differenzdruck $\Delta p$ an der Pumpe zugeordnet sind. Diese Größen hängen zudem von der kinematischen Viskosität $v$ und der Dichte $\rho$ des Fluids und von dem Pumpenvolumen V ab. Durch die Nutzung von dimensionslosen Größen beschreibt Gleichung (1) den Zusammenhang zwischen einem spezifischen Leckagevolumenstrom $Q_L^+$ und einem spezifischen Differenzdruck $\Delta p^+$, der von der Viskosität und der Dichte der Flüssigkeit und von dem Pumpenvolumen unabhängig ist. Dies bedeutet, dass dieser Zusammenhang, sobald entsprechende Parameter a, b und $\Psi$ aufgefunden wurden, unabhängig von Viskosität und Dichte des Fluids und Pumpenvolumen gilt. Eine einmal aufgefundene Gleichung (1) kann somit für verschiedene Fluide und bis zu einem gewissen Grad auch für verschiedene Pumpen genutzt werden.

Die Parameter a, b und $\Psi$ können hierbei durch Kalibriermessungen an der zu nutzenden Pumpe bestimmt werden. Dies wird später noch genauer erläutert werden.

Für einige der obig genannten Zusatzinformationen kann es vorteilhaft sein, diese nicht direkt sensorisch zu erfassen, da eine entsprechende Sensorik relativ aufwändig sein kann. Stattdessen können sie anhand von anderen, einfacher zu erfassenden Betriebsparametern ermittelt werden. Insbesondere können bei Nutzung eines bekannten Fluids die Dichte und/oder die Viskosität des Fluids temperaturabhängig vorgegeben sein, beispielsweise in Form einer Look-up-Tabelle oder eines bekannten mathematischen Zusammenhangs. Dies ermöglicht es, beispielsweise statt eines aufwändigen Viskosimeters eine relativ einfach zu implementierende Temperaturerfassung zu nutzen, die häufig in Fluidkreisläufen ohnehin vorgesehen ist.

Ein Wellenmoment kann beispielsweise über einen Drehmomentsensor direkt erfasst werden. Alternativ ist es auch möglich, das Wellenmoment als Motormoment eines Antriebsmotors zu betrachten. Wird ein Elektromotor genutzt, kann das Motormoment beispielsweise in Abhängigkeit des zugeführten Stroms bzw. der zugeführten Leistung und der Drehzahl ermittelt werden.

Wurden Wellenmomente bestimmt, so kann hieraus auch eine Viskosität des Fluids ermittelt werden. Unter Vernachlässigung der Kompressibilität des Fluids und somit der Kompressionsarbeit gilt für das Wellenmoment Ms folgende Beziehung:

$$(2) \quad M_S \approx \frac{\Delta p V}{2\pi} + M_{mh}$$

Hierbei beschreibt der erste Therm den Drehmomentbeitrag, der zur Fluidförderung benötigt wird, und der zweite Therm $M_{mh}$ beschreibt die mechanischen und hydraulischen Verluste. Diese hängen jedoch gemäß der Beziehung

$$(3) \quad M_{mh} = R_{\Delta p}\Delta p V + R_v \frac{v \rho n V}{\Psi} + R_\rho \rho n^2 V^{5/3}$$

von der kinematischen Viskosität v ab. Die Vorfaktoren R können durch Kalibriermessungen bzw. theoretische Betrachtungen oder Ähnliches bestimmt werden. n ist die Drehzahl der Pumpe bzw. der Welle. Die weiteren Größen wurden bereits vorangehend eingeführt. Sind die anderen Parameter bekannt, kann somit aus dem Wellenmoment Ms die Viskosität v berechnet werden.

Wenigstens ein Drucksensor und/oder wenigstens ein Kraftsensor, der eine auf eine Pumpenkomponente, insbesondere auf ein Lager, wirkende Kraft erfasst, kann verwendet werden, um die Druckinformation zu ermitteln. Insbesondere können zwei Drucksensoren genutzt werden, von denen einer einen Druck in einer Leitung, die der Pumpe Fluid zuführt, und einer einen Druck in einer Leitung, die Fluid von der Pumpe wegführt, misst. Aus diesen beiden Drücken kann der Differenzdruck an der Pumpe und somit die Druckinformation durch Differenzbildung ermittelt werden. Alternativ kann ein Differenzdrucksensor genutzt werden, der fluidisch mit einem Volumen vor und nach der Pumpe gekoppelt ist, um die Druckdifferenz direkt zu ermitteln. Insbesondere bei Schraubenspindelpumpen bewirkt ein Differenzdruck an der Pumpe zudem eine Kraft auf die einzelnen Schraubenspindeln. Somit kann die Druckinformation auch ermittelt werden, indem ein Kraft auf ein Lager einer dieser Schraubenspindeln gemessen wird.

Durch einen Vibrationssensor kann eine Vibration wenigstens einer Komponente der Pumpe erfasst werden, wobei die Drehzahlinformation in Abhängigkeit von Sensordaten des Vibrationssensors ermittelt wird. Bereits geringe Unwuchten von rotierten Teilen, beispielsweise Schraubenspindeln, einer Pumpe führen zu Vibrationen, die stark ausgeprägte Frequenzanteile bei zumindest einem ganzzahligen Vielfachen der Drehzahl haben. Bei Schraubenspindelpumpen treten typischerweise Schwingungsmaxima bei einer Frequenz auf, die der doppelten Drehzahl entspricht. Entsprechende Frequenzen können beispielsweise erkannt werden, in dem ein Vibrationssignal, insbesondere nach einer Digitalisierung, verarbeitet wird, um entsprechende Frequenzanteile zu erkennen. Beispielsweise kann ein Abstand zwischen jeweils zwei Überschreitungen eines Grenzwerts durch das Signal erkannt werden, starke Frequenzanteile können durch eine Autokorrelation erkannt werden oder es kann eine Fouriertransformation des Signals durchgeführt werden. Der Vorteil an der Nutzung eines Vibrationssensors ist es, dass hierzu nicht in die Pumpenmechanik eingegriffen werden muss, da entsprechende Vibrationen an nahezu jeder Komponente, beispielsweise an dem Pumpengehäuse, abgegriffen werden können.

Die Pumpeninformation beschreibt vorzugsweise ein Pumpenvolumen, das ein theoretisches Fördervolumen pro Umdrehung der Pumpe angibt. Unter dem theoretischen Fördervolumen pro Umdrehung ist jenes Volumen zu verstehen, dass bei einer Umdrehung der Pumpe transportiert würde, wenn keine internen Leckagen in der Pumpe auftreten würden, also alle Spalte der Pumpe absolut fluiddicht wären. Das Pumpenvolumen bzw. das theoretische Fördervolumen kann aus einer bekannten Geometrie der Pumpe ermittelt werden, die beispielsweise im Rahmen der Pumpenauslegung definiert wird oder die anhand der Vermessung von Pumpenkomponenten ermittelt wird. Alternativ kann es innerhalb des Verfahrens oder in einem vorbereiteten Schritt möglich sein, das geometrische Pumpenvolumen aus der tatsächlichen Fördermenge zu bestimmen. Beispielsweise kann eine Messserie mit verschiedenen Differenzdrücken an der Pumpe durchgeführt werden. Da der Verlust mit sinkendem Differenzdruck an der Pumpe sinkt, kann die Messserie bis zu einem Differenzdruck von 0 hin extrapoliert werden, womit sich das tatsächlich gemessene Fördervolumen dem theoretischen Fördervolumen annähert.

Zur Berechnung des Durchflussvolumens bzw. des Leckagevolumenstroms sind mehrere Ansätze möglich. Im einfachsten Fall können Kalibriermessungen für eine bestimmte Pumpe oder für eine bestimmte Gruppe von ähnlichen Pumpen durchgeführt werden, wobei jeweils das Durchflussvolumen bzw. der Leckagevolumenstrom für eine Vielzahl von Parametersätzen gemessen wird. Beispielsweise können Messungen für unterschiedliche Differenzdrücke und Drehzahlen durchgeführt werden. Die resultierenden Messwerte können genutzt werden, um eine mehrdimensionale Look-up-Tabelle zu implementieren, so dass aus bestimmten aktuell vorliegenden Parametern jeweils das Durchflussvolumen bzw. der Leckagevolumenstrom aus dieser Tabelle ausgelesen bzw. durch Interpolation aus dieser Tabelle ermittelt werden kann. Alternativ kann anhand der Messwerte auch ein mathematischer Zusammenhang, beispielsweise durch Regressionsanalyse, ermittelt werden, der dann genutzt werden kann, um das Durchflussvolumen bzw. den Leckagevolumenstrom aus den Parametern zu ermitteln.

Prinzipiell ist es auch möglich, diese Messdaten zu nutzen, um ein Verfahren des Maschinenlernens, beispielsweise neuronales Netz, zu trainieren. Das Training kann beispielsweise durch eine Back Propagation of Error erfolgen, das heißt, das neuronale Netz kann derart trainiert werden, dass es mit den Parametern als Eingangsdaten mit möglichst hoher Genauigkeit die entsprechenden Durchflussvolumen bzw. Leckagevolumenströme ermittelt. Entsprechende Verfahren des Maschinenlernens sind im Stand der Technik prinzipiell bekannt und sollen nicht detailliert erläutert werden.

Die beschriebenen Ansätze können jeweils für eine einzelne Pumpe oder Pumpenfamilie durchgeführt werden. Durch Nutzung von Zusatzparametern, beispielsweise eines Pumpentyps oder des Pumpenvolumens, kann jedoch auch eine gemeinsame Look-up-Tabelle bzw. ein gemeinsamer mathematischer Zusammenhang bzw. ein gemeinsames durch Maschinenlernen trainiertes Verfahren genutzt werden, um Durchflussvolumen bzw. Leckagevolumenströme für unterschiedliche Pumpen bzw. Pumpentypen zu ermitteln.

Die bisher erläuterten Verfahren erfordern, dass der gesamte Parameterraum der Eingangsparameter, aus denen das Durchflussvolumen bzw. der Leckagevolumenstrom ermittelt werden soll, abgetastet wird, um anfängliche Messdaten zu ermitteln. Insbesondere, wenn relativ viele Eingangsparameter verwendet werden sollen und beispielsweise eine Vielzahl von Pumpen oder Pumpentypen gemeinsam charakterisiert werden sollen, sind somit sehr aufwändige Messserien erforderlich. Um dies zu vermeiden, sind verschiedene Ansätze denkbar.

So kann ein physikalisches Modell der Pumpe aufgebaut werden, in dem die jeweilige Pumpe als hydraulischer Schaltplan modelliert wird. Hierbei können die auftretenden Spalte verschiedenen Spaltarten zugeordnet werden. Typischerweise ist es ausreichend, ca. 10 verschiedene Spaltarten zu unterscheiden, die teils analytisch und teils semianalytisch beschreibbar sind. Die Parameter des Modells können durch eine exakte Vermessung der tatsächlichen Pumpe ermittelt werden. Alternativ ist es auch möglich, einzelne Spalte gezielt zu modifizieren, um deren Einfluss auf das Durchflussvolumen bzw. den Leckagevolumenstrom zu ermitteln. Die physikalische Modellierung von Pumpen sowie einige Spaltklassen werden beispielsweise in der Veröffentlichung Corneli, T.; Preuß, N.; Troßmann, O.; Pelz, P. F.: "Experimental studies on the volumetric efficiency of triple screw pumps."In: International VDI Conference "Screw Machines 2014", September 23-24, 2014, Dortmund, beschrieben.

Besonders bevorzugt wird in dem erfindungsgemäßen Verfahren jedoch ein Äquivalenzmodell genutzt, das den relativ komplexen Aufbau einer Pumpe auf wenige zu berücksichtigende Parameter reduziert. Ein solches Äquivalenzmodell kann insbesondere durch eine Dimensionsanalyse ermittelt werden, wobei durch entsprechende Modellwahl die Parameter des Fluids, also insbesondere die Viskosität $v$ und die Dichte $\rho$, sowie das Pumpenvolumen V von weiteren empirisch zu ermittelnden Modellparametern separiert werden können. Ein solches Äquivalenzmodell wurde bereits obig als Gleichung (1) angegeben. Als Parameter, die potentiell von der Pumpengeometrie abhängen können, verbleiben in der hierbei die Parameter a, b, $\Psi$ und V.

Im erfindungsgemäßen Verfahren ist es somit möglich, dass zur Ermittlung des Durchflussvolumens und/oder des Leckagevolumenstroms die Pumpengeometrie durch maximal vier Parameter beschrieben wird. Anders ausgedrückt wird das Durchflussvolumen bzw. der Leckagevolumenstrom in Abhängigkeit von maximal vier die Pumpengeometrie betreffenden Parametern ermittelt. Hierbei kann einer der Parameter das Pumpenvolumen bzw. das theoretische Fördervolumen pro Umdrehung der Pumpe beschreiben, wobei die anderen Parameter vorzugsweise dimensionslose, von diesem Volumen unabhängige Größen sind. In der obigen Gleichung sind dies die Parameter a, b und $\Psi$. Die Parameteranzahl kann weiter reduziert werden, indem der Parameter a' wie folgt definiert wird:

$$(4) \qquad a' = a \cdot \Psi^{3b}$$

Somit hängt der spezifische Leckagevolumenstrom $Q_L^+$ ausschließlich vom spezifischen Differenzdruck $\Delta p^+$ und den Parametern a' und b ab. Die Parameter a' und b können im Rahmen von Kalibriermessungen bestimmt werden, in dem der spezifische Leckagevolumenstrom $Q_L^+$ doppellogarithmisch gegen den spezifischen Differenzdruck $\Delta p^+$ aufgetragen wird. Abgesehen von Messfehlern sollten die Messwerte alle auf einer Gerade liegen, wobei der Parameter b der Steigung dieser Gerade und der Parameter a' dem Y-Achsenabschnitt entspricht.

Im Rahmen von Vorversuchen wurde erkannt, dass für unterschiedliche Pumpen des gleichen Typs, jedoch überraschenderweise auch für Pumpen unterschiedlichen Typs, beispielsweise für Kolbenpumpen, Exzenterschneckenpumpen, dreispindlige Schraubenpumpen, Zahnradpumpen und zweispindlige Schraubenpumpen der gleiche Parameter b, beispielsweise 0,7, verwendet werden kann. Die Pumpengeometrie kann somit sogar nur durch zwei Parameter, nämlich das Pumpenvolumen V und den Parameter a' beschrieben werden, wobei a' insbesondere von den in der Pumpe vorhandenen Spalten abhängt. Die Aufteilung der Variable a' in die Variablen a und $\Psi$ in der ursprünglichen Gleichung ermöglicht es, $\Psi$ als relatives Spaltmaß zu definieren, wobei für eine ausgewählte Pumpe $\Psi = 1$ gesetzt werden kann und die Variable a entsprechend gewählt werden kann. Die Beschreibung der Spaltgeometrie kann somit alleine durch den Parameter $\Psi$ erfolgen.

Wenigstens einer der die Pumpengeometrie beschreibenden Parameter kann durch Auswertung von Messdaten wenigstens zweier Kalibriermessungen bestimmt werden, die bei voneinander unterschiedlichem Differenzdruck an der Pumpe durchgeführt werden. Insbesondere können unter Vorgabe des Pumpenvolumens genau zwei Kalibriermessungen durchgeführt werden, um die obig erläuterten Parameter zu ermitteln. Dies ist insbesondere aufgrund des obig erläuterten linearen Zusammenhangs des spezifischen Leckagevolumenstroms und des spezifischen Differenzdrucks in doppellogarithmischer Darstellung leicht möglich.

In Abhängigkeit der Drehzahlinformation und/oder der Druckinformation und/oder der Zusatzinformation und/oder des Leckagevolumenstroms und/oder des Durchflussvolumens, insbesondere in Abhängigkeit des zeitlichen Verlaufs der Drehzahlinformation und/oder der Druckinformation und/oder der Zusatzinformation und/oder des Leckagevolumenstroms und/oder des Durchflussvolumens kann eine Verschleißinformation ermittelt werden, die angibt, ob ein Verschleiß der Pumpe einen vorgegebenen Grenzwert erreicht oder überschreitet und/oder die eine Stärke des Verschleißes angibt und/oder die eine Veränderung der Pumpengeometrie oder der Pumpeninformation aufgrund des Verschleißes beschreibt. Somit kann im Rahmen des erfindungsgemäßen Verfahrens leicht ein Verschleiß der Pumpe erkannt werden, um beispielsweise rechtzeitig einen empfehlenswerten Wechsel der Pumpe zu erkennen. Alternativ oder ergänzend kann die Verschleißinformation berücksichtigt werden, um eine Ermittlung des Durchflusses in Abhängigkeit der Verschleißinformation zu korrigieren und hierbei insbesondere die Pumpeninformation zu modifizieren.

Im einfachsten Fall kann das tatsächliche Durchflussvolumen oder der tatsächliche Leckagevolumenstrom gemessen und mit einem hierfür im Rahmen des erfindungsgemäßen Verfahrens ermittelten Wert verglichen werden. Starke Abweichungen können auf einen Verschleiß der Pumpe hinweisen. Insbesondere kann eine solche Messung für unterschiedliche Differenzdrücke durchgeführt werden, um, wie oben erläutert, wenigstens einen die Pumpengeometrie beschreibenden Parameter zu korrigieren bzw. neu zu bestimmen.

Vorzugsweise sollte die Ermittlung der Verschleißinformation jedoch erfolgen, ohne dass eine direkte Messung des Durchflussvolumens bzw. des Leckagevolumenstroms erfolgt. Hierzu könnte im einfachsten Fall ein ermitteltes Durchflussvolumen bzw. ein ermittelter Leckagevolumenstrom mit einem Grenzwert bzw. wenigstens einem vorangehend ermittelten Wert verglichen werden, um ein Absinken des Durchflussvolumens bzw. ein Ansteigen des Leckagevolumenstroms bei ansonsten gleichen Bedingungen zu erkennen. Die obig erläuterten besonders einfachen Ansätze zur Bestimmung des Durchflussvolumens berücksichtigen zunächst jedoch eine Veränderung der Pumpengeometrie aufgrund eines Verschleißes nicht, so dass diese nicht geeignet sind, einen Verschleiß auf diese Weise zu erkennen.

Um einen Verschleiß auch bei den genannten einfachen Ansätzen zur Durchflussvolumenermittlung erkennen zu können, können andere Indizien für einen Verschleiß ausgewertet werden. Hierzu kann insbesondere ein aktueller Wert bzw. ein zeitlicher Verlauf des Wellenmoments Ms ausgewertet werden. Wie bereits obig zur Gleichung (2) erläutert, umfasst das Wellenmoment ein mechanisch-hydraulisches Verlustmoment $M_{mh}$, das als Gleichung (3) bereits angegeben wurde. Ein Verschleiß der Pumpe kann insbesondere zwei Auswirkungen haben. Ein Verschleiß von Lagern kann eine Reibung in Lagern der Pumpe erhöhen und somit insbesondere den Parameter $R_{\Delta p}$ verändern. Eine Vergrößerung von Spalten aufgrund von Abnutzungserscheinungen oder ein Zusetzen von Spalten durch Verunreinigungen führt zu einer Variation des Spaltmaßes $\Psi$. Ändert sich somit das Wellenmoment bei ansonsten gleichen Parametern deutlich, so deutet dies auf einen Verschleiß der Pumpe hin. Um dies zu erkennen, kann beispielsweise für einen bestimmten oder für mehrere Parametersätze, bei denen die Pumpe betrieben werden kann, ein jeweiliger Grenzwert angegeben werden, wobei ein Überschreiten oder Unterschreiten des jeweiligen Grenzwertes durch das Wellenmoment ein Auftreten von Verschleiß indiziert. Um Fehlerkennungen zu vermeiden, kann bezüglich des Wellenmoments hierbei ein Mittelwert oder ein Medianwert für einen Erfassungszeitraum mit mehreren Wellenmomenterfassungen betrachtet werden. Ein Vergleich mit entsprechenden Grenzwerten kann als Referenzabgleich betrachtet werden.

Alternativ kann der zeitliche Verlauf des Wellenmoments bei ansonsten gleichen Betriebsparametern der Pumpe bzw. unter Berücksichtigung der Veränderungen der weiteren Betriebsparameter der Pumpe betrachtet werden, um einen Trendabgleich durchzuführen. Beispielsweise kann ein Ansteigen des Wellenmoments und ein Abfallen des Wellenmoments über einen längeren Zeitraum bei ansonsten gleichen Betriebsbedingungen auf einen Verschleiß hinweisen.

Um die verschiedenen Arten des Verschleißes unterscheiden zu können bzw. um eine korrigierte Pumpeninformation, insbesondere einen korrigierten Parameter $\Psi$, zu ermitteln, kann eine Messung des Wellenmoments bei unterschiedlichen Drehzahlen und ansonsten gleichen Betriebsparametern der Pumpe durchgeführt werden. Wie Gleichung (3) zu entnehmen ist, sind die verschiedenen Therme des mechanisch-hydraulischen Verlustmoments von verschiedenen Potenzen der Drehzahl n abhängig. Beispielsweise durch eine Regressionsanalyse der bei unterschiedlichen Drehzahlen aufgenommenen Messdaten können somit ein drehzahlunabhängiger Beitrag des Wellenmoments, ein linear von der Drehzahl abhängiger Beitrag des Wellenmoments und ein quadratisch von der Drehzahl abhängiger Anteil des Wellenmoments ermittelt werden. Aus dem linear von der Drehzahl abhängenden Anteil des Moments $M_{mh}$ kann anhand der weiteren bekannten Parameter das Spaltmaß $\Psi$ unmittelbar berechnet werden.

Die Verschleißinformation kann potentiell auch unabhängig von dem Durchflussvolumen ermittelt werden. Somit betrifft die Erfindung auch ganz allgemein ein Verfahren zur Ermittlung einer Verschleißinformation, die einen Verschleiß einer Pumpe betrifft, und die in Abhängigkeit einer mit der Drehzahl der Pumpe korrelierten Drehzahlinformation und/oder einer mit einem Differenzdruck an der Pumpe korrelierten Druckinformation und/oder wenigstens einer der obig genannten Zusatzinformationen bzw. von einem zeitlichen Verlauf dieser Größen abhängt. Das Verfahren kann wie obig erläutert weitergebildet werden.

Daneben betrifft die Erfindung eine Pumpe zur Förderung eines Fluids, die zur Durchführung des erfindungsgemäßen Verfahrens zur Ermittlung eines Durchflussvolumens eingerichtet ist, wobei sie wenigstens eine Sensoreinrichtung, die zur Erfassung der Drehzahlinformation und/oder der Druckinformation und/oder der Zusatzinformation eingerichtet ist, und eine Verarbeitungseinrichtung, die zur Ermittlung des Durchflussvolumens in Abhängigkeit von zumindest der Pumpeninformation, der Drehzahlinformation und der Druckinformation eingerichtet ist, umfasst. Ergänzend oder alternativ kann die Pumpe zur Durchführung des Verfahrens zur Bestimmung der Verschleißinformation eingerichtet sein. Die Verarbeitungseinrichtung kann insbesondere dazu eingerichtet sein, die Pumpe, insbesondere ihre Drehzahl, zu steuern oder zu regeln. Die Verarbeitungseinrichtung kann somit auch als Steuereinrichtung bezeichnet werden. Die Pumpe ist vorzugsweise eine Verdrängerpumpe, speziell eine Schraubenspindelpumpe.

Weitere Vorteile und Einzelheiten der Erfindung ergeben sich aus den folgenden Ausführungsbeispielen sowie den zugehörigen Zeichnungen. Hierbei zeigen schematisch:

Fig. 1    ein Ausführungsbeispiel einer erfindungsgemäßen Pumpe,

Fig. 2    die Informationsverarbeitung in einem Ausführungsbeispiel des erfindungsgemäßen Verfahrens,

Fig. 3    die Ermittlung von eine Pumpengeometrie betreffenden Parametern in dem mit Bezug auf Fig. 2 erläuterten Verfahren, und

Fig. 4    ein Ablaufdiagramm zur Ermittlung einer Verschleißgröße in einem Ausführungsbeispiel des erfindungsgemäßen Verfahrens.

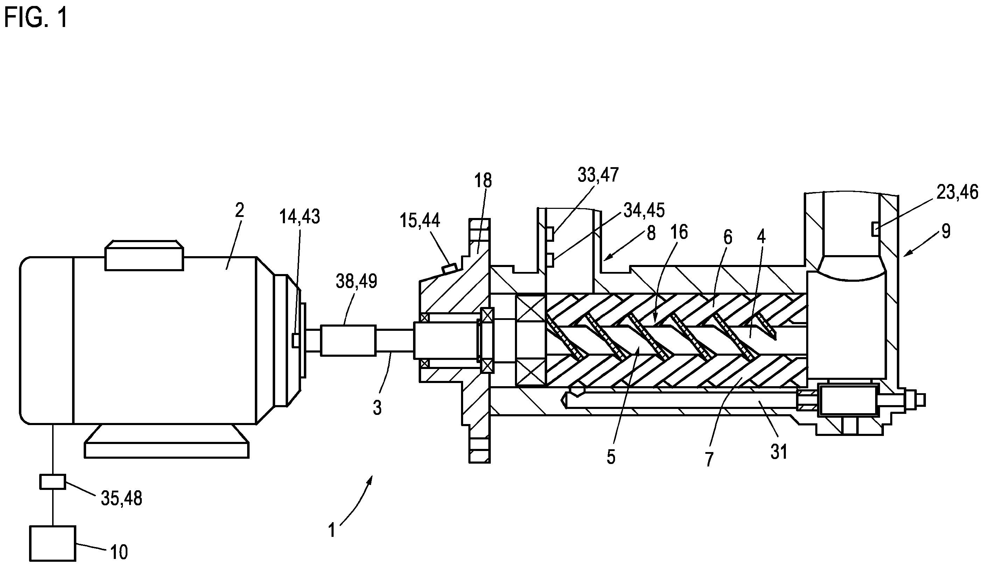

Fig. 1 zeigt eine Pumpe 1, im Beispiel eine Schraubenspindelpumpe. Diese umfasst einen Motor 2, der über eine Welle 3 eine Hauptspindel 4 antreibt. Die Hauptspindel 4 wird auch als Antriebsspindel bezeichnet. Diese ist benachbart zu den Nebenspindeln 6, 7, die auch als Laufspindeln bezeichnet werden, angeordnet, so dass in einem resultierenden Zwischenraum 5, der gemeinsam durch die Hauptspindel 4 und die Nebenspindeln 6, 7 gebildet wird, bei einer Drehung der Welle 3 Fluid von dem Fluideinlass 8 zu dem Fluidauslass 9 gefördert wird. Betriebsparameter der Pumpe 1 werden durch mehrere Sensoreinrichtungen 43 bis 49 erfasst. Schraubenspindelpumpen sind im Stand der Technik wohlbekannt und sollen daher nicht detailliert erläutert werden.

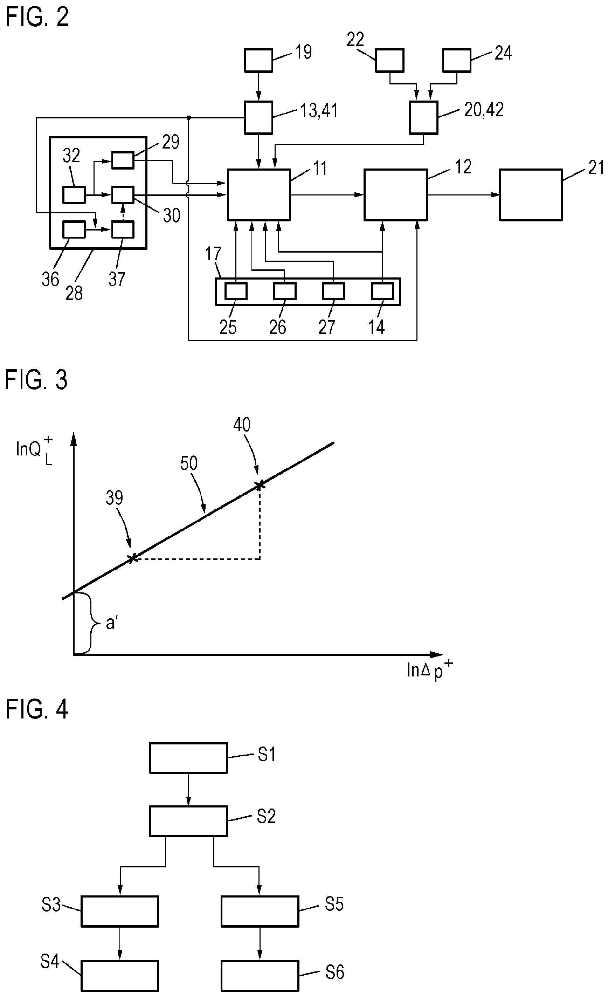

In vielen Anwendungsfällen soll ein von dem Fluideinlass 8 zu dem Fluidauslass 9 gefördertes Durchflussvolumen ermittelt werden. Möglichkeiten hierfür werden im Folgenden mit zusätzlichem Bezug auf Fig. 2 erläutert. Prinzipiell wäre es möglich, einen Leckagevolumenstrom 11, also einen Rückfluss von Fluid durch Spalte 16 der Pumpe 1, vollständig zu vernachlässigen. In diesem Fall könnte als Durchflussvolumen unmittelbar ein theoretischer Fördervolumenstrom 12 ermittelt werden, indem ein vorgegebenes Pumpenvolumen 14 bzw. ein theoretisches Fördervolumen pro Umdrehung der Pumpe mit einer die Drehzahl 13 beschreibenden Drehzahlinformation 41 multipliziert wird. Das geometrische Pumpenvolumen 14, das als Pumpeninformation 17 bzw. Teil dieser Pumpeninformation 17 berücksichtigt wird, kann direkt durch die Parameter der Pumpenauslegung ermittelt werden. Beispielsweise kann es als Funktion des Spindeldurchmessers, der Spindelsteigung und von vorgegebenen Geometriefaktoren ermittelt werden. Hierbei ist es auch möglich, die konkrete Form der Spindeln bzw. des Gehäuses 18 detailliert zu vermessen, um das Volumen genauer bestimmen zu können. Alternativ kann beispielsweise ein Messzyklus mit verschiedenen an der Pumpe 1 abfallenden Drücken durchgeführt werden und hierdurch kann aus den tatsächlichen Durchflussvolumen ein theoretisches Fördervolumen pro Umdrehung extrahiert werden.

Die Drehzahl 13 kann ohnehin bekannt sein, wenn die Verarbeitungseinrichtung 10 den Motor 2 derart steuert, dass eine vorgegebene Drehzahl eingestellt wird. Es ist auch möglich, dass die Drehzahl durch einen Drehzahlsensor 14 unmittelbar erfasst wird. In einigen Ausführungsformen kann es auch vorteilhaft sein, die Drehzahl zu ermitteln, indem über einen Vibrationssensor 15 Sensordaten 19 erfasst werden, die eine Vibration einer Komponente der Pumpe 1, beispielsweise des Gehäuses 18, betreffen. Die Vibrationen bzw. Sensordaten 19 weisen typischerweise einen starken Frequenzbeitrag bei zumindest einem ganzzahligen Vielfachen der Drehzahl 13, insbesondere bei der doppelten Drehzahl 13, auf. Durch Analyse der in den Sensordaten 19 auftretenden Frequenzen kann somit ebenfalls die Drehzahl 13 bestimmt werden.

Der theoretische Fördervolumenstrom 12 ist typischerweise jedoch stark fehlerbelastet. Durch eine zusätzliche Berücksichtigung des Differenzdrucks 20 an der Pumpe 1 kann ein Durchflussvolumen 21 mit erheblich verbesserter Genauigkeit berechnet werden. Insbesondere wird der Leckagevolumenstrom 11 in Abhängigkeit des Differenzdrucks 20 bzw. einer diesen Differenzdruck 20 beschreibenden Druckinformation 42 berechnet und von dem theoretischen Fördervolumenstrom 12 subtrahiert, um das Durchflussvolumen 21 zu bestimmen. Der Differenzdruck 20 kann dadurch ermittelt werden, dass ein einflussseitiger Drucksensor 33 einen ersten Druckwert 22 ermittelt und ein ausflussseitiger Drucksensor 23 einen zweiten Druckwert 24, wobei die Druckwerte 22, 24 voneinander abgezogen werden, um den Differenzdruck 20 zu berechnen. Alternativ könnte beispielsweise ein Differenzdrucksensor genutzt werden, um den Differenzdruck unmittelbar zu ermitteln.

Wie bereits mit Bezug auf Gleichung (1) erläutert, kann der Leckagevolumenstrom 11 von bis zu drei weiteren Parametern 25, 26, 27, beispielsweise den obig erläuterten Parametern a, b und Ψ, abhängen, die als Teil der Pumpeninformation 17 bereitgestellt werden. Diese können wie später noch genauer erläutert werden wird, durch Kalibriermessungen an der Pumpe 1 bzw. an weiteren Pumpen ermittelt werden.

Als Zusatzinformationen 28 können insbesondere eine Dichte 29 und eine Viskosität 30 des geförderten Fluids berücksichtigt werden. Die Dichte 29 und die Viskosität 30 könnten beispielsweise über spezielle Messeinrichtungen, die in einem Bypasskanal 31 angeordnet sein können, ermittelt werden. Bei Verwendung eines stets im Wesentlichen gleichen Fluids bei im Wesentlichen stets gleicher Temperatur können diese Größen auch als konstant angenommen und vorgegeben werden.

Insbesondere, wenn auf eine direkte Ermittlung der Dicht 29 bzw. der Viskosität 30 verzichtet werden soll, kann es vorteilhaft sein, zusätzlich über einen Temperatursensor 33 die Temperatur 32 des Fluids zu erfassen. Diese Temperatur kann insbesondere ausgewertet werden, um mit Hilfe einer Look-up-Tabelle oder eines bekannten mathematischen Zusammenhangs eine temperaturabhängige Viskosität 30 und/oder Dichte 29 des jeweiligen Fluids zu bestimmen.

Zudem kann es vorteilhaft sein, durch einen Stromsensor 35 einen dem Motor 2 zugeführten Strom 36 bzw. eine dem Motor 2 zugeführte Leistung zu überwachen. Gemeinsam mit der Drehzahl 13 kann hieraus ein Drehmoment 37 an der Welle 3 berechnet werden. Alternativ könnte dieses Drehmoment 37 durch einen Drehmomentsensor 38 erfasst werden. Eine Erfassung des Drehmoments kann, wie später noch mit Bezug auf Fig. 4 erläutert werden wird, insbesondere vorteilhaft sein, um einen Verschleiß der Pumpe 1 erkennen zu können bzw. um zumindest einen der Parameter 25, 26, 27 anzupassen, um einen entsprechenden Verschleiß zu berücksichtigen. Zudem kann, wie bereits mit Bezug auf die Gleichungen (2) und (3) erläutert wurde, eine Auswertung des Wellenmoments 37 genutzt werden, um die Viskosität 30 zu bestimmen oder zumindest um Änderungen der Viskosität 30 zu erkennen.

Werden wie obig erläutert die Parameter 25, 26, 27 so gewählt, dass sie den mit Bezug auf Gleichung (1) erläuterten Größen a, b und Ψ entsprechen, so können diese Parameter oder zumindest Teile dieser Parameter durch Kalibriermessungen an der Pumpe ermittelt werden. Dies ist im Folgenden beispielhaft in Fig. 3 dargestellt. Wird die Beziehung

$$(4) \qquad a' = a \cdot \Psi^{3b}$$

in Gleichung (1) eingesetzt, so ist erkennbar, dass bei der in Fig. 3 gezeigten doppellogarithmischen Auftragung des spezifischen Leckagevolumenstroms gegen den spezifischen Differenzdruck die Messpunkte aller Kalibriermessungen 39, 40 auf einer Geraden 50 liegen sollten. Der Y-Achsenabschnitt entspricht hierbei dem Parameter a' und der Parameter b entspricht der Steigung der Geraden 50. Es kann somit bereits ausreichend sein, zwei spezifische Leckagevolumenströme $Q_L^+$ bei verschiedenen spezifischen Differenzdrücken $\Delta p^+$ zu ermitteln, um die Parameter a' und b zu ermitteln. Wie bereits mit Bezug auf Gleichung (1) erläutert, wären diese Parameter bereits ausreichend, um den Zusammenhang zwischen Leckagevolumenstrom und Differenzdruck an der Pumpe 1 zu beschreiben. Die Aufteilung des Parameters a' in die Parameter a und Ψ kann vorteilhaft sein, da der Parameter Ψ durch entsprechende Wahl des Parameters a so gewählt werden kann, dass er intuitiv als ein Maß für einen Spalt aufgefasst werden kann.

Fig. 4 zeigt ein Ablaufdiagramm eines Verfahrens zur Ermittlung eines Verschleißes der Pumpe 1. Dieses kann als Teil des vorangehend beschriebenen Verfahrens zur Ermittlung eines Durchflussvolumens betrachtet werden, jedoch auch separat hiervon genutzt werden. Zur Erkennung eines Verschleißes wird ausgenutzt, dass ein mechanisch-hydraulisches Verlustmoment $M_{mh}$, wie bereits obig erläutert, wie folgt dargestellt werden kann:

$$(3) \qquad M_{mh} = R_{\Delta p} \Delta p V + R_v \frac{v \rho n V}{\Psi} + R_\rho \rho n^2 V^{5/3}$$

Die drei summierten Verlusttherme hängen jeweils von einer anderen Potenz der Drehzahl n ab. Um dies auszunutzen, werden in Schritt S1 zunächst die Wellenmomente 37 bei mehreren Drehzahlen und ansonsten gleichen Messparametern ermittelt. Die Messungen bei den einzelnen Drehzahlen erfolgen hierbei quasi-statisch, das heißt, es wird zunächst eine Drehzahl eingestellt und mindestens so lange beibehalten, bis sich das Wellenmoment 37 stabilisiert hat. Beiträge zur Erhöhung bzw. zur Verringerung der Drehzahl werden somit nicht berücksichtigt.

In Schritt S2 wird eine Analyse der in Schritt S1 erfassten Messdaten durchgeführt, wobei insbesondere ein Fit bzw. eine Regression durchgeführt wird, um zwischen Beiträgen zum Wellenmoment 37 zu unterscheiden, die nicht von der Drehzahl n, linear von der Drehzahl n und quadratisch von der Drehzahl n abhängen. In dem gezeigten Ausführungsbeispiel werden in Schritt S3 ausschließlich die von n unabhängigen Drehmomentbeiträge berücksichtigt, aus denen in Schritt S4 insbesondere der Parameter $R_{\Delta p}$ ermittelt bzw. eine Änderung dieses Parameters erkannt werden kann. Eine Änderung des Parameters $R_{\Delta p}$ kann insbesondere darauf hinweisen, dass ein Verschleiß zu gesteigerten Reibungsverlust in einem Lager der Pumpe 1 führt.

In Schritt S5 werden hingegen ausschließlich die linear von der Drehzahl abhängigen Beiträge zum Drehmoment berücksichtigt. Aus diesen kann in Schritt S6 unter der Annahme, dass $R_v$ konstant ist, eine Veränderung des Spaltmaßes $\Psi$ bzw. ein konkreter Wert für diese Größe ermittelt werden. Somit kann eine Veränderung der Spaltgeometrie durch Ablagerungen oder durch Materialabtrag ebenfalls erkannt werden. Insbesondere kann der auf diesem Wege ermittelte Parameter $\Psi$ als Teil der Pumpeninformation 17 bei einer späteren Ermittlung des Durchflussvolumens 21 berücksichtigt werden. Somit ist es potentiell nicht nur möglich, das Vorhandensein eines Verschleißes zu erkennen, um beispielsweise einen Nutzer auf einen erforderlichen Wechsel oder eine erforderliche Wartung der Pumpe hinzuweisen, es können sogar konkrete Auswirkungen des Verschleißes auf die Durchflussmessung ermittelt und berücksichtigt werden.

## Patentansprüche

1. Verfahren zur Ermittlung eines Durchflussvolumens (21) eines durch eine Pumpe (1) geförderten Fluids, wobei das Durchflussvolumen (21) in Abhängigkeit einer vorgegebenen, von einer Pumpengeometrie abhängenden Pumpeninformation (17), einer Drehzahlinformation (41), die mit der Drehzahl (13) der Pumpe (1) korreliert, und einer Druckinformation (42), die mit einem Differenzdruck (20) an der Pumpe (1) korreliert ermittelt wird, wobei die Pumpe (1) eine Verdrängerpumpe ist, wobei das Durchflussvolumen (21) berechnet wird, indem ein in Abhängigkeit der Druckinformation (42) ermittelter Leckagevolumenstrom (11) von einem in Abhängigkeit eines durch die Pumpeninformation (17) vorgegebenen Pumpenvolumens (14) und der Drehzahlinformation (41) ermittelten theoretischen Fördervolumenstrom (12) subtrahiert wird, **dadurch gekennzeichnet, dass** als Zusatzinformation (28) ein Betriebsstrom (36) und/oder ein Wellenmoment (37) der Pumpe (1) erfasst werden, wobei der Leckagevolumenstrom (11) in Abhängigkeit der Zusatzinformation (28) ermittelt wird.

2. Verfahren nach Anspruch 1, **dadurch gekennzeichnet, dass** als weitere Zusatzinformation (28) eine Temperatur (32) und/oder eine Dichte (29) des Fluids erfasst werden, wobei das Durchflussvolumen (21) und/oder der Leckagevolumenstrom (11) in Abhängigkeit der weiteren Zusatzinformation (28) ermittelt werden.

3. Verfahren nach Anspruch 1 oder 2, **dadurch gekennzeichnet, dass** wenigstens ein Drucksensor (21, 23) und/oder wenigstens ein Kraftsensor, der eine auf eine Pumpenkomponente, insbesondere auf ein Lager, wirkende Kraft erfasst, verwendet werden, um die Druckinformation (42) zu ermitteln.

4. Verfahren nach einem der vorangehenden Ansprüche, **dadurch gekennzeichnet, dass** durch einen Vibrationssensor (15) eine Vibration wenigstens einer Komponente der Pumpe (1) erfasst wird, wobei die Drehzahlinformation (41) in Abhängigkeit von Sensordaten (19) des Vibrationssensors ermittelt wird.

5. Verfahren nach einem der vorangehenden Ansprüche, **dadurch gekennzeichnet, dass** die Pumpeninformation (17) ein Pumpenvolumen (14) beschreibt, das ein theoretisches Fördervolumen pro Umdrehung der Pumpe (1) angibt.

6. Verfahren nach einem der vorangehenden Ansprüche, **dadurch gekennzeichnet, dass** zur Ermittlung des Durchflussvolumens (21) und/oder des Leckagevolumenstroms (11) die Pumpengeometrie durch maximal vier Parameter (25, 26, 27) beschrieben wird.

7. Verfahren nach Anspruch 6, **dadurch gekennzeichnet, dass** wenigstens einer der die Pumpengeometrie beschreibenden Parameter (25, 26, 27) durch Auswertung von Messdaten wenigstens zweier Kalibriermessungen (39, 40) bestimmt wird, die bei voneinander unterschiedlichem Differenzdruck (20) an der Pumpe (1) durchgeführt werden.

8. Verfahren nach einem der vorangehenden Ansprüche, **dadurch gekennzeichnet, dass** in Abhängigkeit der Drehzahlinformation (41), insbesondere in Abhängigkeit des zeitlichen Verlaufs der Drehzahlinformation (41), eine Verschleißinformation ermittelt wird, die angibt, ob ein Verschleiß der Pumpe (1) einen vorgegebenen Grenzwert erreicht oder überschreitet und/oder die eine Stärke des Verschleißes angibt und/oder die eine Veränderung der Pumpengeometrie oder der Pumpeninformation (17) aufgrund des Verschleißes beschreibt.

9. Verfahren nach einem der vorangehenden Ansprüche, **dadurch gekennzeichnet, dass** in Abhängigkeit der Druckinformation (42), insbesondere in Abhängigkeit des zeitlichen Verlaufs der Druckinformation (42), die oder eine Verschleißinformation ermittelt wird, die angibt, ob ein Verschleiß der Pumpe (1) einen vorgegebenen Grenzwert erreicht oder überschreitet und/oder die eine Stärke des Verschleißes angibt und/oder die eine Veränderung der Pumpengeometrie oder der Pumpeninformation (17) aufgrund des Verschleißes beschreibt.

10. Verfahren nach einem der vorangehenden Ansprüche, **dadurch gekennzeichnet, dass** in Abhängigkeit der Zusatzinformation (28), nämlich des Betriebsstroms (36) und/oder des Wellenmoments (37) der Pumpe (1), insbesondere in Abhängigkeit des zeitlichen Verlaufs der Zusatzinformation (28), die oder eine Verschleißinformation ermittelt wird, die angibt, ob ein Verschleiß der Pumpe (1) einen vorgegebenen Grenzwert erreicht oder überschreitet und/oder die eine Stärke des Verschleißes angibt und/oder die eine Veränderung der Pumpengeometrie oder der Pumpeninformation (17) aufgrund des Verschleißes beschreibt.

11. Verfahren nach einem der vorangehenden Ansprüche, **dadurch gekennzeichnet, dass** in Abhängigkeit des Leckagevolumenstroms (11), insbesondere in Abhängigkeit des zeitlichen Verlaufs des Leckagevolumenstroms (11), die oder eine Verschleißinformation ermittelt wird, die angibt, ob ein Verschleiß der Pumpe (1) einen vorgegebenen Grenzwert erreicht oder überschreitet und/oder die eine Stärke des Verschleißes angibt und/oder die eine Veränderung der Pumpengeometrie oder der Pumpeninformation (17) aufgrund des Verschleißes beschreibt.

12. Verfahren nach einem der vorangehenden Ansprüche, **dadurch gekennzeichnet, dass** in Abhängigkeit des Durchflussvolumens (21), insbesondere in Abhängigkeit des zeitlichen Verlaufs des Durchflussvolumens (21), die oder eine Verschleißinformation ermittelt wird, die angibt, ob ein Verschleiß der Pumpe (1) einen vorgegebenen Grenzwert erreicht oder überschreitet und/oder die eine Stärke des Verschleißes angibt und/oder die eine Veränderung der Pumpengeometrie oder der Pumpeninformation (17) aufgrund des Verschleißes beschreibt.

13. Pumpe zur Förderung eines Fluids, **dadurch gekennzeichnet, dass** sie zur Durchführung des Verfahrens nach einem der vorangehenden Ansprüche eingerichtet ist, wobei sie wenigstens eine Sensoreinrichtung (43 - 49), die zur Erfassung der Drehzahlinformation (41) und/oder der Druckinformation (42) und/oder der Zusatzinformation (28) eingerichtet ist, und eine Verarbeitungseinrichtung (10), die zur Ermittlung des Durchflussvolumens (21) in Abhängigkeit von zumindest der Pumpeninformation (17), der Drehzahlinformation (41), der Druckinformation (42) und der Zusatzinformation (28) eingerichtet ist, umfasst.

**Claims**

1. Method for determining a flow volume (21) of a fluid delivered by a pump (1), wherein the flow volume (21) is determined as a function of predefined pump information (17), which is dependent on a pump geometry, rotation speed information (41), which correlates with the rotation speed (13) of the pump (1), and pressure information (42), which correlates with a differential pressure (20) at the pump (1), wherein the pump (1) is a positive-displacement pump, wherein the flow volume (21) is calculated by subtracting a leakage volume flow (11) determined as a function of the pressure information (42) from a theoretical delivery volume flow (12) determined as a function of a pump volume (14) predefined by the pump information (17) and the rotation speed information (41), **characterized in that**, as additional information (28), an operating current (36) and/or a shaft torque (37) of the pump (1) are registered, wherein the leakage volume flow (11) is determined as a function of the additional information (28).

2. Method according to Claim 1, **characterized in that**, as further additional information (28), a temperature (32) and/or a density (29) of the fluid are registered, wherein the flow volume (21) and/or the leakage volume flow (11) are determined as a function of the further additional information (28).

3. Method according to Claim 1 or 2, **characterized in that** at least one pressure sensor (21, 23) and/or at least one force sensor which registers a force acting on a pump component, in particular on a bearing, are used to determine the pressure information (42).

4. Method according to one of the preceding claims, **characterized in that**, by a vibration sensor (15), a vibration of at least one component of the pump (1) is registered, wherein the rotation speed information (41) is determined in dependence on sensor data (19) of the vibration sensor.

5. Method according to one of the preceding claims, **characterized in that** the pump information (17) describes a pump volume (14) which indicates a theoretical delivery volume per revolution of the pump (1).

6. Method according to one of the preceding claims, **characterized in that**, for the determination of the flow volume (21) and/or of the leakage volume flow (11), the pump geometry is described by a maximum of four parameters (25, 26, 27).

7. Method according to Claim 6, **characterized in that** at least one of the parameters (25, 26, 27) describing the pump geometry is defined by evaluating measurement data of at least two calibrating measurements (39, 40) which are performed on the pump (1) at mutually different differential pressure (20).

8. Method according to one of the preceding claims, **characterized in that**, as a function of the rotation speed information (41), in particular as a function of the temporal progression of the rotation speed information (41), wear information, which indicates whether wear on the pump (1) reaches or exceeds a predefined limit value and/or which indicates a severity of the wear and/or which describes a change in the pump geometry or in the pump information (17) due to the wear, is determined.

9. Method according to one of the preceding claims, **characterized in that**, as a function of the pressure information (42), in particular as a function of the temporal progression of the pressure information (42), wear information, which indicates whether wear on the pump (1) reaches or exceeds a predefined limit value and/or which indicates a severity of the wear and/or which describes a change in the pump geometry or in the pump information (17) due to the wear, is determined.

10. Method according to one of the preceding claims, **characterized in that**, as a function of the additional information (28), namely the operating current (36) and/or the shaft torque (37) of the pump (1), in particular as a function of the temporal progression of the additional information (28), wear information, which indicates whether wear on the pump (1) reaches or exceeds a predefined limit value and/or which indicates a severity of the wear and/or which describes a change in the pump geometry or in the pump information (17) due to the wear, is determined.

11. Method according to one of the preceding claims, **characterized in that**, as a function of the leakage volume flow (11), in particular as a function of the temporal progression of the leakage volume flow (11), wear information, which indicates whether wear on the pump (1) reaches or exceeds a predefined limit value and/or which indicates a severity of the wear and/or which describes a change in the pump geometry or in the pump information (17) due to the wear, is determined.

12. Method according to one of the preceding claims, **characterized in that**, as a function of the flow volume (21), in particular as a function of the temporal progression of the flow volume (21), wear information, which indicates whether wear on the pump (1) reaches or exceeds a predefined limit value and/or which indicates a severity of the wear and/or which describes a change in the pump geometry or in the pump information (17) due to the wear, is determined.

13. Pump for delivering a fluid, **characterized in that** it is designed to implement the method according to one of the preceding claims, wherein it comprises at least one sensor device (43 - 49), which is designed to register the rotation speed information (41) and/or the pressure information (42) and/or the additional information (28), and a processing device (10), which is designed to determine the flow volume (21) in dependence on at least the pump information (17), the rotation speed information (41), the pressure information (42) and the additional information (28).

## Revendications

1. Procédé de détermination d'un volume d'écoulement (21) d'un fluide transporté à travers une pompe (1), le volume d'écoulement (21) étant déterminé en fonction d'une information de pompe (17) prédéfinie qui dépend d'une géométrie de pompe, d'une information de vitesse de rotation (41) qui est corrélée à la vitesse de rotation (13) de la pompe (1) et d'une information de pression (42) qui est corrélée à une pression différentielle (20) au niveau de la pompe (1), la pompe (1) étant une pompe volumétrique, le volume d'écoulement (21) étant calculé en soustrayant un débit volumique de fuite (11), déterminé en fonction de l'information de pression (14), d'un débit volumique de refoulement théorique (12), déterminé en fonction d'un volume de pompe (42) prédéfini par l'information de pompe (17) et l'information de vitesse de rotation (41), **caractérisé en ce qu'**un courant de fonctionnement (36) et/ou un couple d'arbre (37) de la pompe (1) sont détectés en tant qu'information supplémentaire (28), le débit volumique de fuite (11) étant déterminé en fonction de l'information supplémentaire (28).

**2.** Procédé selon la revendication 1, **caractérisé en ce qu'**une température (32) et/ou une densité (29) du fluide sont détectées en tant qu'autre information supplémentaire (21), le volume d'écoulement (28) et/ou le débit volumique de fuite (11) étant déterminés en fonction de l'autre information supplémentaire (28).

**3.** Procédé selon la revendication 1 ou 2, **caractérisé en ce qu'**au moins un capteur de pression (21, 23) et/ou au moins un capteur de force, qui détecte une force agissant sur un composant de pompe, en particulier sur un palier, sont utilisés pour déterminer l'information de pression (42).

**4.** Procédé selon l'une des revendications précédentes, **caractérisé en ce qu'**une vibration d'au moins un composant de la pompe (1) est détectée par un capteur de vibrations (15), l'information de vitesse de rotation (41) étant déterminée en fonction des données de capteur (19) du capteur de vibrations.

**5.** Procédé selon l'une des revendications précédentes, **caractérisé en ce que** l'information de pompe (17) décrit un volume de pompe (14) qui indique un volume de refoulement théorique par tour de la pompe (1).

**6.** Procédé selon l'une des revendications précédentes, **caractérisé en ce que** la géométrie de la pompe est décrite par un maximum de quatre paramètres (25, 26, 27) en vue de déterminer le volume d'écoulement (21) et/ou le débit volumique de fuite (11).

**7.** Procédé selon la revendication 6, **caractérisé en ce qu'**au moins l'un des paramètres (25, 26, 27) qui décrivent la géométrie de la pompe est spécifié par l'évaluation de données de mesure d'au moins deux mesures d'étalonnage (39, 40) qui sont effectuées sur la pompe (1) avec des pressions différentielles (20) différente l'une de l'autre.

**8.** Procédé selon l'une des revendications précédentes, **caractérisé en ce qu'**en fonction de l'information de vitesse de rotation (41), en particulier en fonction de l'évolution dans le temps de l'information de vitesse de rotation (41), est déterminée une information d'usure qui indique si une usure de la pompe (1) atteint ou dépasse une valeur limite prédéfinie et/ou qui indique un degré d'usure et/ou qui décrit une modification de la géométrie de la pompe ou de l'information de pompe (17) en raison de l'usure.

**9.** Procédé selon l'une des revendications précédentes, **caractérisé en ce qu'**en fonction de l'information de pression (42), en particulier en fonction de l'évolution dans le temps de l'information de pression (42), est déterminée la ou une information d'usure qui indique si une usure de la pompe (1) atteint ou dépasse une valeur limite prédéfinie et/ou qui indique un degré d'usure et/ou qui décrit une modification de la géométrie de la pompe ou de l'information de pompe (17) en raison de l'usure.

**10.** Procédé selon l'une des revendications précédentes, **caractérisé en ce qu'**en fonction de l'information supplémentaire (28), à savoir le courant de fonctionnement (36) et/ou le couple d'arbre (37) de la pompe (1), en particulier en fonction de l'évolution dans le temps de l'information supplémentaire (28), est déterminée la ou une information d'usure qui indique si une usure de la pompe (1) atteint ou dépasse une valeur limite prédéfinie et/ou qui indique un degré d'usure et/ou qui décrit une modification de la géométrie de la pompe ou de l'information de pompe (17) en raison de l'usure.

**11.** Procédé selon l'une des revendications précédentes, **caractérisé en ce qu'**en fonction du débit volumique de fuite (11), en particulier en fonction de l'évolution dans le temps du débit volumique de fuite (11), est déterminée la ou une information d'usure qui indique si une usure de la pompe (1) atteint ou dépasse une valeur limite prédéfinie et/ou qui indique un degré d'usure et/ou qui décrit une modification de la géométrie de la pompe ou de l'information de pompe (17) en raison de l'usure.

**12.** Procédé selon l'une des revendications précédentes, **caractérisé en ce qu'**en fonction du volume d'écoulement (21), en particulier en fonction de l'évolution dans le temps du volume d'écoulement (21), est déterminée la ou une information d'usure qui indique si une usure de la pompe (1) atteint ou dépasse une valeur limite prédéfinie et/ou qui indique un degré d'usure et/ou qui décrit une modification de la géométrie de la pompe ou de l'information de pompe (17) en raison de l'usure.

**13.** Pompe destinée à transporter un fluide, **caractérisée en ce qu'**elle est conçue pour mettre en œuvre le procédé selon l'une des revendications précédentes, celle-ci comportant au moins un dispositif capteur (43 - 49) qui est conçu pour détecter l'information de vitesse de rotation (41) et/ou l'information de pression (42) et/ou l'information supplémentaire (28), et un dispositif de traitement (10) qui est conçu pour déterminer le volume d'écoulement (21) en fonction au moins de l'information de pompe (17), de l'information de vitesse de rotation (41), de l'information de pression (42) et de l'information supplémentaire (28).

FIG. 1

FIG. 2

FIG. 3

$\ln Q_L^+$

40

50

39

a'

$\ln \Delta p^+$

FIG. 4

S1

S2

S3

S4

S5

S6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017205777 A1
- DE 102011086572 A1
- US 2018259382 A1
- US 5267441 A

**In der Beschreibung aufgeführte Nicht-Patentliteratur**

- **VERÖFFENTLICHUNG CORNELI, T.** ; **PREUß, N** ; **TROßMANN, O** ; **PELZ, P. F.** Experimental studies on the volumetric efficiency of triple screw pumps. *International VDI Conference "Screw Machines 2014*, 23 September 2014